# EUROPÄISCHE PATENTSCHRIFT

(11) **EP 0 821 431 B1**
(45) Veröffentlichungstag und Bekanntmachung des Hinweises auf die Patenterteilung: **23.04.2003**
(21) Anmeldenummer: 97109090.7
(22) Anmeldetag: 05.06.1997
(51) Int. Cl.: H01Q 13/02, G01N 22/00, G01F 23/284

(54) **Anordnung zur Erzeugung und zum Senden von Mikrowellen, insb. für ein Füllstandsmessgerät**
Device for generating and emitting microwaves, especially for a filling level measuring device
Dispositif de production et d'émission de micro-ondes, notamment pour un appareil pour la mesure de niveau

(30) Priorität: 23.07.1996 DE 19629593
(43) Veröffentlichungstag der Anmeldung: 28.01.1998
(73) Patentinhaber: Endress + Hauser GmbH + Co.KG., 79689 Maulburg (DE)
(72) Erfinder: Burger, Stefan, 79108 Freiburg (DE)

(56) Entgegenhaltungen:
- EP-A- 0 114 140
- DE-A- 4 005 230
- DE-U- 9 412 243
- US-A- 3 680 138
- US-A- 4 051 447
- US-A- 4 721 933
- PATENT ABSTRACTS OF JAPAN vol. 005, no. 141 (E-073), 5. September 1981 -& JP 56 076605 A (NIPPON TELEGR & TELEPH CORP ;OTHERS: 01), 24. Juni 1981

## Beschreibung

Die Erfindung betrifft eine Anordnung zur Erzeugung und Ausstrahlung von Mikrowellen, insb. für ein Füllstandsmeßgerät, wobei die Anordnung
- einen Mikrowellen-Generator,
- eine Antenne mit kreisförmigem Querschnitt und
- eine von dem Mikrowellen-Generator zur Antenne führende Koaxialleitung mit einem Innenleiter und einem Außenleiter umfaßt.

Anordnungen zur Erzeugung und Ausstrahlung von Mikrowellen werden u.a. in der Füllstandsmeßtechnik eingesetzt. Bei der Füllstandsmessung werden Mikrowellen mittels einer Antenne zur Oberfläche eines Füllguts gesendet und die an der Oberfläche reflektierten Echowellen empfangen. Es wird eine die Echoamplituden als Funktion der Entfernung darstellende Echofunktion gebildet, aus der das wahrscheinliche Nutzecho und dessen Laufzeit bestimmt werden. Aus der Laufzeit wird der Abstand zwischen der Füllgut-Oberfläche und der Antenne bestimmt.

Es können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar).

Beim Pulsradar werden periodisch kurze Mikrowellen-Sendeimpulse, im folgenden als Wellenpakete bezeichnet, gesendet, die von der Füllgut-Oberfläche reflektiert und nach einer abstandsabhängigen Laufzeit wieder empfangen werden. Die empfangene Signalamplitude als Funktion der Zeit stellt die Echofunktion dar. Jeder Wert dieser Echofunktion entspricht der Amplitude eines in einem bestimmten Abstand von der Antenne reflektierten Echos.

Beim FMCW-Verfahren wird eine kontinuierliche Mikrowelle gesendet, die periodisch linear frequenzmoduliert ist, beispielsweise nach einer Sägezahnfunktion. Die Frequenz des empfangenen Echosignals weist daher gegenüber der Augenblicksfrequenz, die das Sendesignal zum Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

Elektromagnetische Wellen breiten sich in Koaxialleitungen im transversal-elektro-magnetischen Mode (TEM-Mode) dispersionsfrei aus. Dieser Feldmode eignet sich daher besonders gut zum Transport von Wellenpaketen oder elektromagnetischen Wellen, deren Frequenzen eine Bandbreite aufweisen. Der Vorteil der dispersionsfreien Ausbreitung ist besonders dann wichtig, wenn die zu sendenden Wellen oder Wellenpakete die erwähnte Bandbreite ihrer Frequenzen aufweisen. Eingespeiste Wellenpakete erfahren dann praktisch keine Verbreiterung, und bei linear frequenzmodulierten Mikrowellen wird eine Linearitätsabweichung weitgehend vermieden.

Zum gerichteten Senden von elektromagnetischen Wellen mittels einer Antenne sind jedoch solche Moden besser geeignet, die eine Abstrahlcharakteristik mit einer ausgeprägten Vorwärtskeule aufweisen. Diese Eigenschaft weist der in Rundhohlleitern ausbreitungsfähige transversal elektrische 11-Mode (TE-11) auf. Es ist daher eine Moden-Wandlung vorzunehmen, damit der wesentliche Anteil der erzeugten Mikrowellenenergie in die gewünschte Richtung gesendet wird.

In Abhängigkeit von den Abmessungen eines Rundhohlleiters, hier der Antenne, gibt es einen Frequenzbereich, in dem die TE-11-Mode der einzige ausbreitungsfähige Mode ist. Oberhalb dieses Frequenzbereichs sind auch höhere für das gerichtete Senden von Mikrowellen weniger gut geeignete Moden, z.B. der TM-01-Mode, ausbreitungsfähig.

In der DE-A 27 44 841 ist eine Anordnung zur Erzeugung und zum Senden von Mikrowellen beschrieben, welche
- einen Mikrowellen-Generator,
- eine Antenne und
- eine von dem Mikrowellen-Generator zur Antenne führende Koaxialleitung mit einem Innenleiter und einem Außenleiter umfaßt.

Die Antenne weist eine Eintrittsöffnung mit rechteckigem Querschnitt auf. In diesem Antennenabschnitt, der seiner Geometrie nach ein kurzgeschlossener Rechteckhohlleiter ist, ist ein an die Koaxialleitung angeschlossener Sendepilz beispielsweise in einer die Antenne abschließenden Rückwand angeordnet. An den Rechteckhohlleiter grenzt ein Übergangsstück an, durch das der rechteckige Querschnitt kontinuierlich in einen runden Querschnitt überführt wird. An das Übergangsstück grenzt ein Antennenabschnitt mit einem sich im wesentlichen exponentiell erweiternden Kreisquerschnitt an.

Der Rechteckhohlleiter ist für einen gewünschten Frequenzbereich so zu dimensionieren, daß praktisch nur der transversal-elektrische 10-Mode (TE-10-Mode) ausbreitungsfähig ist und höhere Moden eine starke Dämpfung erfahren. In dem Übergangsstück geht der TE-10-Mode des Rechteckhohlleiters über in den TE-11-Mode des Rundhohlleiters.

In der DE-A 27 44 841 ist angegeben, diese Anordnung bei Füllstandsmeßgeräten einzusetzen.

Ein Nachteil einer solchen Anordnung ist es, daß die mechanische Fertigung des Übergangsstücks aufwendig ist. Ein weiterer Nachteil besteht darin, daß zwei zusätzliche Übergänge, nämlich vom Koaxialleiter zum Rechteckhohlleiter und vom Rechteckhohlleiter zum Abschnitt mit kreisförmigem Querschnitt, vorgesehen sind, wobei an jedem der Übergänge aufgrund von Impedanzsprüngen Verlustleistungen auftreten.

Weiterhin ist es üblich, einen Sendepilz direkt an einem einseitig abgeschlossenen Rundhohlleiter anzuordnen. Zur Anregung des gewünschten TE-11-Modes ist es hier erforderlich, den Sendepilz seitlich in den Rundhohlleiter und nicht durch die den Rundhohlleiter abschließende Rückwand einzubringen.

Ein Nachteil einer solchen Anordnung ist es, daß die seitliche Anbringung des Sendepilzes im allgemeinen ein zusätzliches Gehäuse zum Schutz der an den Pilz angeschlossenen Koaxialleitung erforderlich macht und somit der Durchmesser der Anordnung gegenüber einer Anordnung, bei der die Einkopplung der Mikrowellen durch eine Rückwand der Antenne erfolgt, vergrößert ist.

Ein weiterer Nachteil besteht darin, daß aufgrund der Asymmetrie der Anordnung nicht nur der TE-11-Mode, sondern auch höhere Moden angeregt werden. Höhere Moden weisen jedoch eine Abstrahlcharakteristik mit einem größeren Öffnungswinkel auf und sind für eine gerichtete Ausstrahlung daher weniger gut geeignet. Der Frequenzbereich, in dem im wesentlichen nur der TE-11-Mode ausbreitungsfähig ist, ist in einem Rundhohlleiter geringer als der Frequenzbereich, in dem in einem Rechteckhohlleiter im wesentlichen nur der TE-10-Mode ausbreitungsfähig ist.

In der US-A1-3 680 138 ist eine Anordnung zur Erzeugung und Aussendung von Mikrowellen beschrieben, die einen Mikrowellen-Generator, eine Antenne mit kreisförmigem Querschnitt, eine vom Mikrowellen-Generator zur Antenne führenden Koaxialleitung mit einem Innenleiter und einem Außenleiter, wobei an einer Rückwand der Antenne ein Sendedraht befestigt ist, der im Inneren der Antenne verläuft, dessen Enden mit dem Innenleiter des Koaxialleiters und mit der Rückwand der Antenne verbunden sind und der einen geraden Abschnitt und zwei daran angrenzende Schenkel aufweist.

Obwohl mit dieser Anordnung eine gegenüber den vorher erwähnten Anordnungen verbesserte Abstrahlcharakteristik erreicht werden kann, hat sich gezeigt, daß mit der Anordnung nach der US-A1-3 680 138 nicht jene Breitbandigkeit erreicht werden kann, die für eine Verwendung in Füllstandsmeßgeräten gewünscht wird.

Es ist eine Aufgabe der Erfindung, eine Anordnung zur Erzeugung und zum Senden von Mikrowellen, insb. für ein Füllstandsmeßgerät anzugeben, der einen Mikrowellen-Mode erzeugt, der eine Abstrahlcharakteristik mit einer ausgeprägten Vorwärtskeule aufweist, und die in einem großen Frequenzbereich einsetzbar ist.

Weiterhin ist es eine Aufgabe der Erfindung, eine Anordnung zur Erzeugung und zum Senden von Mikrowellen, insb. für ein Füllstandsmeßgerät anzugeben, der innerhalb eines Frequenzbereichs einsetzbar ist, der größer ist, als der Frequenzbereich, in dem der gewünschte Mikrowellen-Mode mit der Abstrahlcharakteristik, die eine ausgeprägte Vorwärtskeule aufweist, der einzige ausbreitungsfähige Mode ist, und bei dem trotzdem nur der gewünschte Mode erzeugt und gesendet wird.

Dies erreicht die Erfindung dadurch, daß
der Abstand zwischen einer von einem Hohlzylinder gebildeten Seitenwand der Antenne und zwei durch die Enden und den Abschnitt begrenzten Schenkeln des Sendedrahts mit zunehmendem Abstand von der Rückwand der Antenne zunimmt.

Gemäß einer Ausgestaltung der Erfindung verläuft der gerade Abschnitt des Sendedraht von der Rückwand der Antenne beabstandet.

Gemäß einer weiteren Ausgestaltung ist der mittlere Abstand zwischen dem geraden Abschnitt des Sendedrahts und der Rückwand der Antenne gleich einem Viertel der Hohlleiter-Wellenlänge in der Antenne bei einer zu sendenden Frequenz, insb. bei einer Mittenfrequenz eines Frequenzspektrums eines zu sendenden Mikrowellen-Sendepulses oder bei einer Mittenfrequenz eines linear frequenzmodulierten FMCW-Sendesignals.

Gemäß einer weiteren Ausgestaltung ist der Sendedraht auf einer in der Antenne befestigten Leiterplatte angeordnet.

Gemäß einer weiteren Ausgestaltung ist an dem Sendedraht ein Kompensationsglied, insb. ein Metallkonus oder ein Metallring, angeordnet.

Gemäß einer weiteren Ausgestaltung ist in der Antenne ein Einsatz aus einem Dielektrikum, insb. aus Polytetrafluorethylen (PTFE) angeordnet, der den Innenraum der Antenne in der Umgebung des Sendedrahts ausfüllt.

Gemäß einer weiteren Ausgestaltung weist die Antenne eine erste Befestigungsvorrichtung, insb. einen Flansch oder ein Außengewinde, auf, mittels der sie an einem Ort, insb. auf einem Tank oder einem Behälter, befestigbar ist.

Weiterhin besteht die Erfindung in der Verwendung einer der vorgenannten Anordnungen in einem Füllstandsmeßgerät.

Ein Vorteil besteht darin, daß die Einkopplung der Koaxialleitung in die Antenne an deren Rückwand erfolgt.

Damit weist die Anordnung einen geringen Außendurchmesser auf und kann beispielsweise in kleinen Öffnungen angebracht werden.

Ein weiterer Vorteil der Erfindung besteht darin, daß durch die Geometrie der Anordnung die Anregung des zum Sende-Mode nächsthöheren Modes (TM-01) praktisch ausgeschlossen ist. Obwohl in einem vom Durchmesser der Antenne abhängigen Frequenzbereich sowohl der gewünschte TE-11-Mode als auch der nächsthöhere TM-01-Mode prinzipiell ausbreitungsfähig wären, kann ein Frequenzbereich genutzt werden, der größer als der Eindeutigkeitsbereich der TE-11-Mode ist, da nur die TE-11-Mode angeregt und die Ausbildung der TM-01-Mode durch destruktive Interferenz derselben im Nahbereich des Sendedrahts unterbunden ist.

Die Erfindung und weitere Vorteile werden nun anhand der Figuren der Zeichnung, in denen zwei Ausführungsbeispiele der Anordnung zur Erzeugung und Ausstrahlung von Mikrowellen und drei Ausführungsbeispiele von Füllstandsmeßgeräten dargestellt sind, näher erläutert; gleiche Elemente sind in den Figuren mit gleichen Bezugszeichen versehen.
- Fig. 1: zeigt schematisch eine Anordnung zur Erzeugung und zum Senden von Mikrowellen und einen Längsschnitt durch eine Antenne mit einem Sendedraht;
- Fig. 2: zeigt eine Draufsicht auf die Seite der Rückwand der Antenne, auf der der Sendedraht angeordnet ist;
- Fig. 3: zeigt schematisch eine Anordnung zur Erzeugung und zum Senden von Mikrowellen und einen Längsschnitt durch eine Antenne, bei der der Sendedraht auf einer Leiterplatte angeordnet ist;
- Fig. 4: zeigt die Anordnung von Fig. 3 um 90° gedreht;
- Fig. 5: zeigt eine schematische Darstellung eines Füllstandsmeßgeräts mit einem Hornstrahler;
- Fig. 6: zeigt eine schematische Darstellung eines Füllstandsmeßgeräts, das auf einem Schwall- oder Bypassrohr angeordnet ist; und
- Fig. 7: zeigt eine schematische Darstellung eines Füllstandsmeßgeräts mit einer

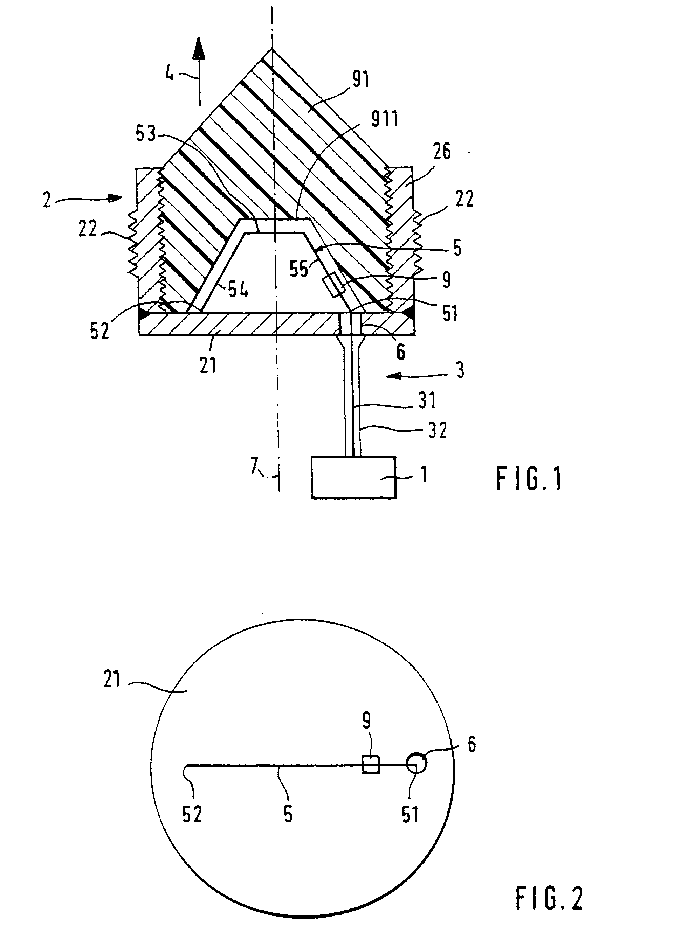

In Fig. 1 ist schematisch eine Anordnung zur Erzeugung und zum Senden von Mikrowellen dargestellt. Die Mikrowellen werden von einem Mikrowellen-Generator 1 erzeugt und mittels einer Antenne 2 gesendet.

Der Mikrowellen-Generator 1 ist beispielsweise ein Pulsradar-Gerät, ein FMCW-Gerät oder ein kontinuierlich schwingender Mikrowellen-Oszillator.

Eine handelsübliche Koaxialleitung 3 mit einem Innenleiter 31 und einem Außenleiter 32 führt vom Mikrowellen-Generator 1 zur Antenne 2.

Die Antenne 2 besteht aus einem elektrisch leitenden Material, z.B. aus Aluminium oder einem Edelstahl, oder aus einem mit einem leitfähigen Material beschichteten Kunststoff und weist einen kreisförmigen Querschnitt auf. Die Abstrahlrichtung der Mikrowellen ist durch einen Pfeil 4 angedeutet.

Die Antenne 2 besteht aus einem Hohlzylinder 26 und einer den Hohlzylinder 26 abschließenden Rückwand 21. Die Antenne 2 weist somit die Geometrie eines kurzgeschlossenen Rundhohlleiters auf.

In der Antenne 2 ist auf der Rückwand 21 ein Sendedraht 5 aus einem leitfähigen Metall, z.B. aus Kupfer, Silber oder Aluminium, angeordnet. Ein erstes Ende 51 des Sendedrahts 5 ist elektrisch leitend mit dem Innenleiter 31 der Koaxialleitung 3 verbunden.

Hierzu ist eine Durchführung 6, z.B. eine Glasdurchführung, in der Rückwand 21 vorgesehen. Die Durchführung 6 muß eine Isolationsschicht aufweisen, damit gewährleistet ist, daß im Bereich der Durchführung 6 keine elektrisch leitende Verbindung zwischen dem Innenleiter 31 und der Rückwand 21 besteht. Der Außenleiter 32 der Koaxialleitung 3 ist elektrisch leitend mit der Rückwand 21 der Antenne 2 verbunden. Die Rückwand 21 übernimmt die Funktion eines Außenleiters bei dieser koaxialen Durchführung.

Das zweite Ende 52 des Sendedrahts 5 ist elektrisch leitend mit der Rückwand 21 der Antenne 2 verbunden. Beispielsweise ist es an der Rückwand 21 angelötet, oder die Rückwand 21 weist ein Sackloch auf, in die der Sendedraht 5, gegebenenfalls unter Zwischenfügung eines Fixierelementes einsteckbar ist. Das Fixierelement kann z.B. eine Metallhülse oder eine Kunststoffhülse sein. Die Kunststoffhülse ist so auszuwählen, daß für den gewünschten Frequenzbereich der Mikrowellen eine elektrisch leitende Verbindung zwischen dem Sendedraht 5 und der Rückwand 21 besteht. Es liegt dann ein kapazitiver Anschluß des Sendedrahts 5 an die Rückwand 21 vor, d.h. für Mikrowellen besteht eine elektrisch leitende Verbindung, für niederfrequente Ströme und für Gleichspannung wirkt die Kunststoffhülse jedoch als Isolator.

Abgesehen von den beiden Enden 51, 52 die wie bereits beschrieben an der Rückwand 21 der Antenne 2 angeordnet sind, verläuft der Sendedraht 5, wie aus den Figuren 1 und 2 ersichtlich, im Inneren der Antenne 2. Der Sendedraht 5 weist drei Bereiche auf, einen geraden von der Rückwand 21 der Antenne 2 beabstandet verlaufenden Abschnitt 53 und zwei daran angrenzende vom Abschnitt 53 zu den Enden 51 bzw. 52 führende Schenkel 54, 55. Diese 54, 55 sind gegenüber einer Längsachse 7 der Antenne 2 geneigt, so daß der Abstand zwischen dem Hohlzylinder 26 der Antenne 2 und den Schenkeln 54, 55 mit zunehmendem Abstand von der Rückwand 21 der Antenne 2 zunimmt.

Zur Erzielung einer möglichst hohen Mikrowellen-Sendeleistung bei einer einzigen vorgegebenen Sendefrequenz ist die Geometrie des Sendedrahtes 5 derart zu wählen, daß die von dem Sendedraht 5 und der Rückwand 21 der Antenne 2 begrenzte Schnittfläche trapezförmig ist und symmetrisch zur Längsachse 7 angeordnet ist. Diese hochsymmetrische Geometrie des Sendedrahts 5 bewirkt eine optimale Anpassung der elektrischen Impedanz für die vorgegebene Frequenz. Weiterhin ist durch die Symmetrie der Anordnung die Anregung der nächsthöheren unsymmetrischen TM-01-Mode ausgeschlossen.

Damit jedoch die mittlere Mikrowellen-Sendeleistung über einen vorgegebenen Frequenzbereich möglichst groß ist, ist von dieser hochsymmetrischen Geometrie abzuweichen. Beispielsweise sind die Schenkel 54, 55 derart anzuordnen, daß sie gegenüber der Längsachse unterschiedlich stark geneigt sind und/oder der gerade Abschnitt 53 ist gegenüber der Rückwand 21 geneigt anstatt parallel dazu anzuordnen. Anstelle einer optimalen Anpassung für eine einzige Frequenz liegt somit eine gute Anpassung für einen Frequenzbereich vor.

Bei einer Abweichung von der oben angegebenen hochsymmetrischen Geometrie ist zwar nicht auszuschließen, daß der TM-01-Mode erzeugt wird, er wird jedoch bereits im Nahbereich des Sendedrahts 5 durch destruktive Interferenz unterdrückt. Ursache hierfür ist die Aufteilung des Sendedrahts 5 in die drei Bereiche, nämlich den Abschnitt 53 und die Schenkel 54, 55 und deren geometrische Anordnung in der Antenne 2.

Die optimale Form des Sendedrahts 5 für eine Antenne 2 mit einem vorgegebenen Durchmesser kann entweder experimentell bestimmt werden, oder durch Näherungslösungen der Maxwellschen Gleichungen unter Einbeziehung aller Randbedingungen, wie Abmessung und Material der Antenne 2, Material des Sendedrahts 5 und Frequenzbereich rechnerisch ermittelt werden.

Die Anregung des gewünschten Mikrowellen-Modes erfolgt hauptsächlich durch den im Inneren der Antenne 2 verlaufenden Abschnitt 53 des Sendedrahts 5. Zur Erzeugung des gewünschten TE-11-Modes ist der mitttlere Abstand zwischen dem Abschnitt 53 des Sendedrahts 5 und der Rückwand 21 der Antenne 2 so zu wählen, daß er gleich einem Viertel der Hohlleiter-Wellenlänge λ_{H} des TE-11-Modes in dem Rundhohlleiter Antenne 2 ist. Für die Bestimmung dieser Hohlleiter-Wellenlänge λ_{H} ist eine relevante Frequenz der zu sendenden Mikrowellen zu verwenden. Die relevante Frequenz ist bei Verwendung eines Pulsradar-Generators gleich einer Mittenfrequenz eines Frequenzspektrums des Sendepulses und bei Verwendung eines linear frequenzmodulierten FMCW-Generators gleich dessen Mittenfrequenz.

Bei der beschriebenen Anordnung ist es möglich einen Frequenzbereich für die Mikrowellen zuzulassen, der größer ist, als der Frequenzbereich, in dem bei gegebenen Abmessungen allein der TE-11-Mode ausbreitungsfähig ist, ohne daß der nächhöhere TM-01-Mode erzeugt und gesendet wird.

Bei einer Antenne 2 mit einem Durchmesser von 25 Millimetern mit einem im nachfolgenden Text näher beschriebenen Einsatz 91 aus einem Dielektrikum mit einer Dielektrizitätskonstanten von 2,0 beträgt die Grenzfrequenz für den TE-11-Mode 5,0 GHz und für den TM-01-Mode 6,5 GHz. Unterhalb seiner Grenzfrequenz ist der jeweilige Mode nicht ausbreitungsfähig. Der Frequenzbereich in dem einzig der TE-11-Mode ausbreitungsfähig ist weist eine Bandbreite von 6,5 GHz - 5,0 GHz = 1,5 GHz auf. Die erfindungsgemäße Anordnung ist jedoch bis zu Frequenzen von 7,2 Ghz einsetzbar, ohne daß der TM-01-Mode entsteht; dies entspricht einer Bandbreite von 7,2 GHz - 5,0 GHz = 2,2 Ghz und somit einer Verbreiterung der nutzbaren Frequenzbandbreite von 2,2 GHz / 1,5 GHz = 146 %.

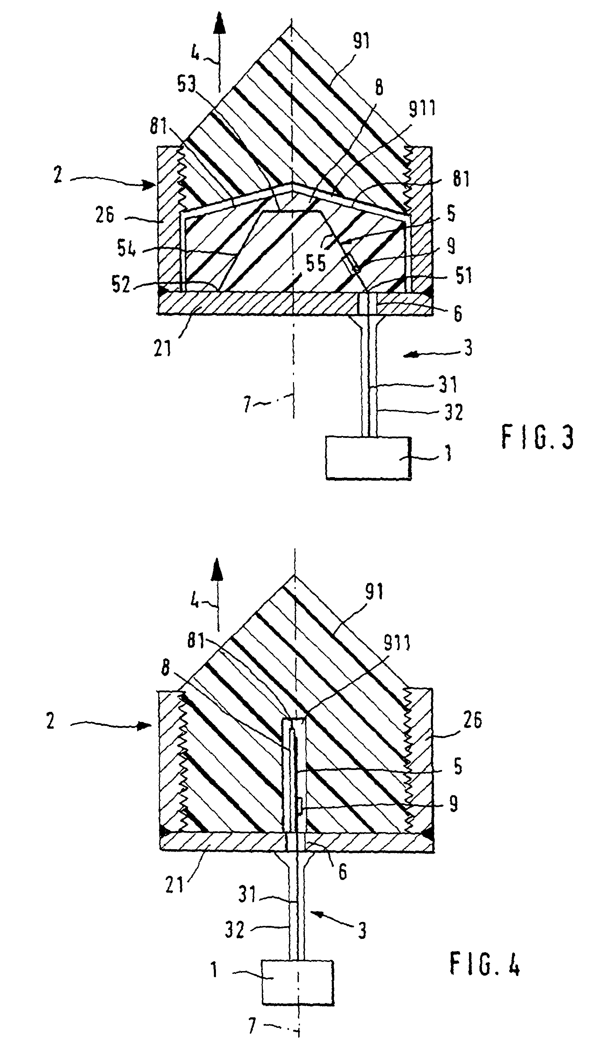

Anstelle eines frei in der Antenne 2 verlaufenden, lediglich an dessen Enden 51, 52 befestigten Sendedrahts 5 ist auch eine Leiterplatte 8 einsetzbar, auf der ein entsprechender Sendedraht 5 angeordnet ist. Dies ist schematisch in den Figuren 3 und 4 dargestellt. Zur Befestigung der Leiterplatte 8 können in der Rückwand 21 eine längs der Diagonalen und im Hohlzylinder 26 zwei einander diametral gegenüberliegende Nuten angeordnet sein, in die die Leiterplatte 8 einsteckbar ist. Die elektrische Kontaktierung der Enden 51 und 52 des Sendedrahts 5 erfolgt analog zu der Kontaktierung des Sendedrahts 5 ohne Leiterplatte 8.

Die Leiterplatte 8 hat einen Einfluß auf die Ausbreitung der Mikrowellen im Bereich der Antenne 2. Besonders die Kante 81 der Leiterplatte 8, die in Abstrahlrichtung weist, stellt einen Impedanzsprung dar. Um dadurch bedingte Verlustleistung gering zu halten, empfielt es sich, statt einer rechteckigen Leiterplatte eine Leiterplatte 8 einzusetzen, die eine in Fig. 3 dargestellte, sich in Abstrahlrichtung, z.B. dreieckförmig, verjüngende Breite aufweist. Dadurch wird eine kontinuierliche Angleichung der Impedanz erzielt.

Ein weiterer Impedanzsprung tritt bei dem Übergang von der Koaxialleitung 3 auf den Sendedraht 5 in der Antenne 2 auf. Um auch dadurch bedingte Verluste gering zu halten, ist zum einen ein Kompensationsglied 9 vorgesehen, das an dem an die Durchführung 6 angrenzenden Bereich des Schenkels 55 des Sendedrahts 5 angeordnet ist. Dies ist im dargestellten Ausführungsbeispiel ein Metallring. Andere Bauelemente, die den Wellenwiderstand des Sendedrahts 5 verändern, z.B. ein Metallkonus, sind einsetzbar. Zum anderen bewirkt das Zunehmen des Abstand zwischen dem Hohlzylinder 26 der Antenne 2 und den Schenkeln 54, 55 mit zunehmendem Abstand von der Rückwand 21 der Antenne 2 einen kontinuierlichen Übergang der Impedanz zur Impedanz der Antenne.

Zur kontinuierlichen Anpassung der Impedanz der Antenne 2 an die Impedanz des Außenraums, in den die Mikrowellen zu senden sind, kann ein in Fig. 1 dargestellter Einsatz 91 aus einem Dielektrikum, insb. Polytetrafluorethylen (PTFE), in der Antenne 2 angeordnet sein. Dieser weist einen zylindrischen Abschnitt, der den Innenraum der Antenne 2 bis auf den für den Sendedraht 5 und gegebenenfalls die Leiterplatte 8 benötigten Raum vollständig ausfüllt, und einen kegelförmigen Abschnitt, der aus der Antenne 2 herausragt und dessen Spitze in Abstrahlrichtung weist, auf. Befestigt ist dieser Einsatz 91 z.B., indem er ein Außengewinde 92 aufweist, daß in ein im Hohlzylinder 26 angeordnetes Innengewinde einschraubbar ist. Anschließend wird die Rückwand 21 mit dem darauf angeordneten Sendedraht 5 auf dem Hohlzylinder 26 montiert, z.B. aufgeschweißt. Zur Aufnahme des Sendedrahts 5 weist der Einsatz 91 eine Aussparung 911 auf. Andere Befestigungsarten, z.B. mittels einer an der Innenwand des Hohlzylinders 26 angeordneten umlaufenden Absatzfläche, die eine Bewegung des Einsatzes 91 in Abstrahlrichtung verhindert, sind selbstverständlich möglich.

Die Antenne 2 weist eine erste Befestigungsvorrichtung auf, mittels der die Anordnung an einem Ort, z.B. auf einem Tank oder Behälter, befestigbar ist. Diese ist beispielsweise ein Flansch, oder wie in Fig. 1 dargestellt, ein Außengewinde 22.

Weiterhin ist an der Antenne 2 oder an der Rückwand 21 eine zweite Befestigungsvorrichtung vorzusehen, durch die ein Gehäuse zu befestigen ist. Beispielsweise ist das Gehäuse auf ein an der Antenne 2 angefromtes Außengewinde aufgeschraubt. Vorteilhafgt ist hier, daß durch die Einkopplung der Mikrowellen durch die Rückwand 21 hindurch kein zusätzlicher Raumbedarf für diese besteht. Der Gehäuseinnendurchmesser entspricht dem Außendurchmesser der Antenne 2.

Die beschriebenen Anordnungen zur Erzeugung und zum Senden sind besonders zur Füllstandsmessung geeignet, da sie ein verlustarmes Senden von Mikrowellen oder Mikrowellen-Impulsen, deren Frequenzen eine Bandbreite aufweisen, ermöglicht. Bekannte Verfahren zur Füllstandsmessung mittels Mikrowellen sind bereits in der Einleitung erwähnt. Hinsichtlich des mechanischen Aufbaus wird auf die Figuren 1 bis 4 und deren Beschreibung verwiesen.

Auf die Antenne einfallende Mikrowellenstrahlung wird durch diese auf den Sendedraht 5 geleitet. Ein von der Füllgut-Oberfläche reflektiertes Echosignal gelangt somit über den nun als Empfangsdraht dienenden Sendedraht 5 an die Koaxialleitung 3 und steht, z.B. durch Zwischenfügung eines Richtkopplers, zu einer weiteren Verarbeitung und/oder Auswertung zur Verfügung.

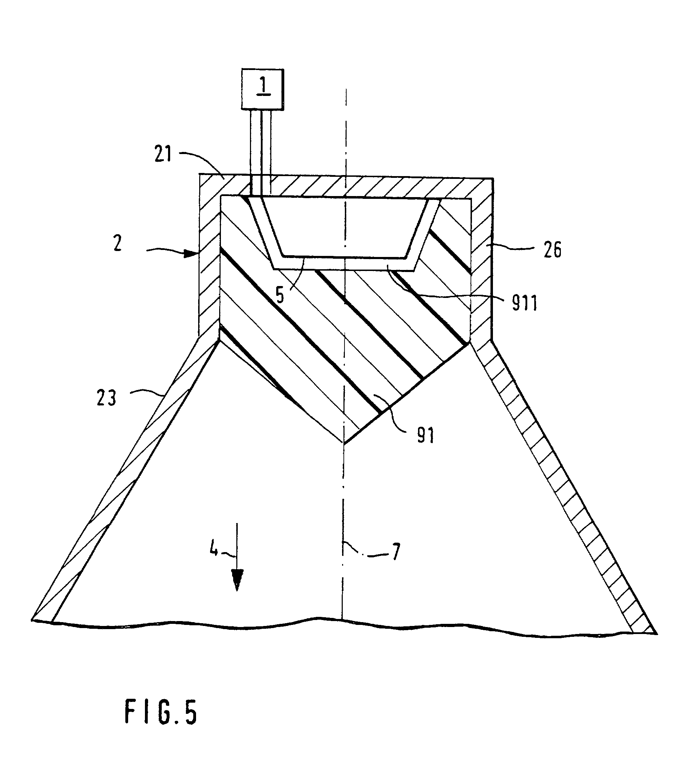

Die in den Figuren 1 bis 4 dargestellten Anordungen können direkt ohne Modifikationen mit den in der Füllstandsmeßtechnik üblichen Antennentypen versehen werden. Die Figuren 5 bis 7 zeigen einige lediglich schematisch dargestellte Beispiele.

Das in Fig. 5 dargestellte Füllstandsmeßgerät weist eine Anordnung zur Erzeugung und Ausstrahlung von Mikrowellen auf, wie sie z.B. in Fig. 1 oder Fig. 3 dargestellt ist. An die Antenne 2 ist ein Trichter 23 angeformt. Antenne 2 und Trichter 23 bilden einen Hornstrahler. An die Rückwand 21 schließt sich beispielsweise ein hier nicht dargestelltes Gehäuse an, in dem der Mikrowellen-Generator 1, die Koaxialleitung 3 und eine Auswerte-Elektronik angeordnet sind.

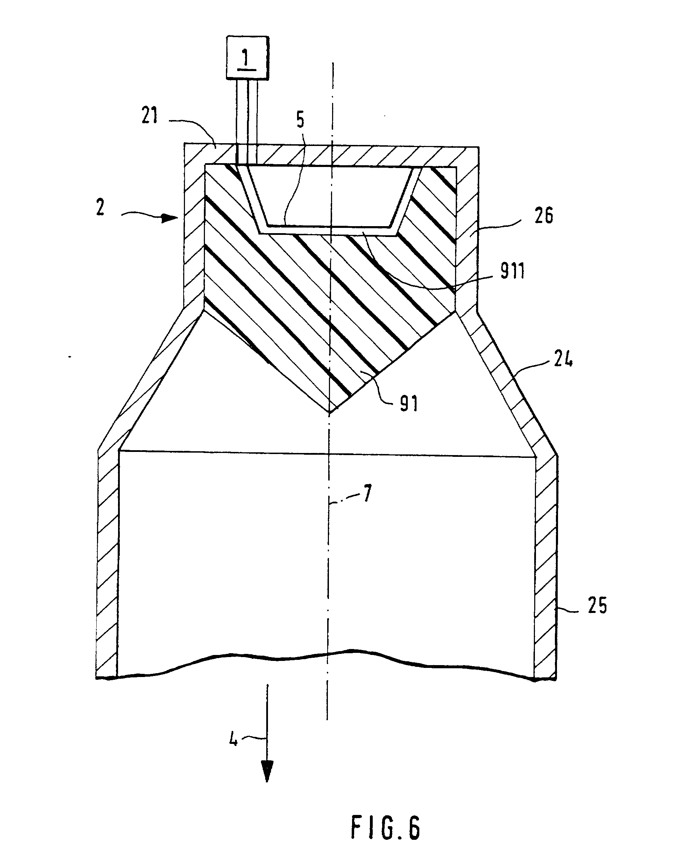

Fig. 6 zeigt eine Anordnung gemäß Fig. 1 oder 3, bei der die Antenne 2 über ein Anpassungselement 24 an einem Schwall- oder Bypass-Rohr 25 angeordnet ist.

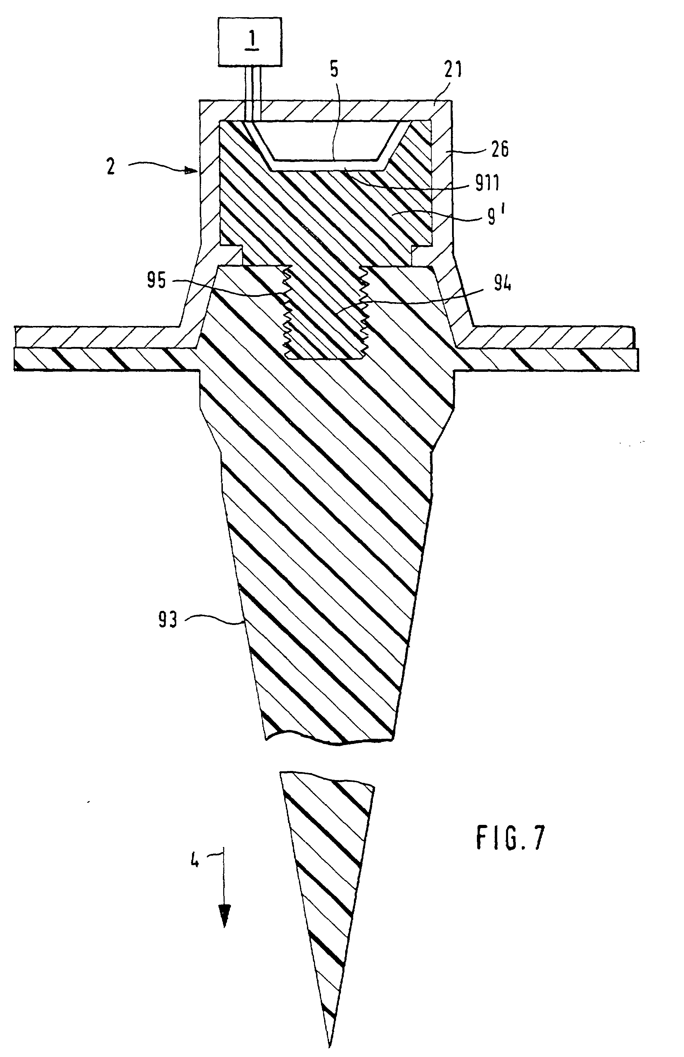

Das in Fig. 7 dargestellte Füllstandsmeßgerät weist eine Stabantenne 93 aus einem Dielektrikum, z.B. aus Polytetrafluorethylen (PTFE), auf. Hierzu ist anstatt des in den Figuren 1 und 3 dargestellten Einsatzes 91 mit einem kegelförmigen Abschnitt ein zylindrischer Einsatz 9' eingesetzt, an dessen in Abtrahlrichtung weisender Frontfläche ein zylindrischer Abschnitt 94 mit einem Außengewinde 95 angeformt ist. Darauf ist die Stabantennte 93, die eine formgleiche Ausnehmung mit einem Innengewinde aufweist, aufgeschraubt.

## Patentansprüche

1. Anordnung zur Erzeugung und Aussendung von Mikrowellen, mit
- einem Mikrowellen-Generator (1),
- einer Antenne (2) mit kreisförmigem Querschnitt,
- einer von dem Mikrowellen-Generator (1) zur Antenne (2) führenden Koaxialleitung (3) mit einem Innenleiter (31) und einem Außenleiter (32),
- einem an einer Rückwand (21) der Antenne (2) befestigten Sendedraht (5),
-- der im Inneren der Antenne (2) verläuft,
-- dessen erstes Ende (51) mit dem Innenleiter (31) des Koaxialleiters (3) verbunden ist,
-- dessen zweites Ende (52) mit der Rückwand (21) der Antenne (2) verbunden ist und
-- der einen geraden Abschnitt (53) und zwei daran angrenzende Schenkel (54, 55) aufweist,
--- **dadurch gekennzeichnet, daß** der Abstand zwischen einer von einem Hohlzylinder (26) gebildeten Seitenwand der Antenne (2) und zwei durch die Enden (51, 52) und den Abschnitt (53) begrenzten Schenkeln (54, 55) des Sendedrahts (5) mit zunehmendem Abstand von der Rückwand (21) der Antenne (2) zunimmt.

2. Anordnung nach Anspruch 1, **dadurch gekennzeichnet, daß** der gerade Abschnitt (53) des Sendedrahts (5) von der Rückwand (21) der Antenne (2) beabstandet verläuft.

3. Anordnung nach Anspruch 2, **dadurch gekennzeichnet, daß** der mittlere Abstand zwischen dem geraden Abschnitt (53) des Sendedrahts (5) und der Antenne (2) gleich einem Viertel der Hohlleiter-Wellenlänge in der Antenne (2) bei einer zu sendenden Frequenz, insb. bei einer Mittenfrequenz eines Frequenzspektrums eines zu sendenden Mikrowellen-Sendepulses oder bei einer Mittenfrequenz eines linear frequenzmodulierten FMCW-Sendesignals, ist.

4. Anordnung nach Anspruch 1, **dadurch gekennzeichnet, daß** der Sendedraht (5) auf einer in der Antenne (2) befestigten Leiterplatte (8) angeordnet ist.

5. Anordnung nach Anspruch 1, **dadurch gekennzeichnet, daß** an dem Sendedraht (5) ein Kompensationsglied (9), insb. ein Metallkonus oder ein Metallring, angeordnet ist.

6. Anordnung nach Anspruch 1, **dadurch gekennzeichnet, daß** in der Antenne (2) ein Einsatz aus einem Dielektrikum, insb. aus Polytetrafluorethylen angeordnet ist, der den Innenraum der Antenne in der Umgebung des Sendedrahts (5) ausfüllt.

7. Anordnung nach Anspruch 1, **dadurch gekennzeichnet, daß** die Antenne (2) eine erste Befestigungsvorrichtung, insb. einen Flansch oder ein Außengewinde (22), aufweist, mittels der sie an einem Ort, insb. auf einem Tank oder einem Behälter, befestigbar ist.

8. Verwendung einer Anordnung nach einem der Ansprüche 1 bis 7 in einem Füllstandsmeßgerät.

## Claims

1. An arrangement for generating and emitting microwaves, with
- a microwave generator (1),
- an antenna (2) of circular cross-section,
- a coaxial transmission line (3) leading from the microwave generator (1) to the antenna (2), with an inner conductor (31) and an outer conductor (32),
- a transmission wire (5) on a rear wall (21) of the antenna (2),
-- which wire follows a course inside the antenna (2), the first end (51) of which wire is connected to the inner conductor (31) of the coaxial transmission line (3),
-- the second end (52) of which wire is connected to the rear wall (21) of the antenna (2), and
which exhibits a straight section (53) and two adjoining legs (54, 55), **characterised in that** the distance between a side wall of the antenna (2) formed by a hollow cylinder (26), and two legs (54, 55) of the transmission wire (5), delimited by the ends (51, 52) and the section (53), increases with increasing distance from the rear wall (21) of the antenna (2).

2. An arrangement according to Claim 1, **characterised in that** the straight section (53) of the transmission wire (5) follows a course at a distance from the rear wall (21) of the antenna (2).

3. An arrangement according to Claim 2, **characterised in that** the average distance between the straight section (53) of the transmission wire (5) and the antenna (2) is equal to one quarter of the waveguide wavelength in the antenna at a frequency to be transmitted, in particular at a mid-frequency of a frequency spectrum of a microwave transmit pulse or at a mid-frequency of a linearly frequency-modulated FMCW transmitter signal.

4. An arrangement according to Claim 1, **characterised in that** the transmission wire (5) is arranged on a printed circuit board (8) fixed in the antenna (2).

5. An arrangement according to Claim 1, **characterised in that** a compensating device (9), in particular a metal cone or a metal ring, is arranged on the transmission wire (5).

6. An arrangement according to Claim 1, **characterised in that** an insert made of a dielectric material, in particular polytetrafluoroethylene, is arranged in the antenna (2), the said insert filling the space inside the antenna around the transmission wire (5).

7. An arrangement according to Claim 1, **characterised in that** the antenna (2) has a first fixing device, in particular a flange or an outer thread (22), by means of which it is attachable in one location, in particular on a tank or a container.

8. Use of an arrangement according to one of Claims 1 to 7 in a level-measuring instrument.

## Revendications

1. Agencement pour la production et l'émission de micro-ondes avec
- un générateur de micro-ondes (1),
- une antenne (2) de section circulaire,
- une ligne coaxiale (3) allant du générateur de micro-ondes (1) à l'antenne (2) avec un conducteur intérieur (31) et un conducteur extérieur (32),
- un fil d'émission (5) fixé sur une paroi arrière (21) de l'antenne (2),
-- qui s'étend à l'intérieur de l'antenne (2),
-- dont la première extrémité (51) est reliée au conducteur intérieur (31) du conducteur coaxial (3),
-- dont la deuxième extrémité (52) est reliée à la paroi arrière (21) de l'antenne (2) et
-- qui présente un segment droit (53) et deux côtés adjacents (54, 55) audit segment,
--- **caractérisé en ce que** l'écart entre une paroi latérale de l'antenne (2) formée par un cylindre creux (26) et deux côtés (54, 55) du fil d'émission (5) limités par les extrémités (51, 52) et le segment (53) augmente avec l'augmentation de l'écart de la paroi arrière (21) de l'antenne (2).

2. Agencement selon la revendication 1, **caractérisé en ce que** le segment droit (53) du fil d'émission (5) s'étend avec un écart de la paroi arrière (21) de l'antenne (2).

3. Agencement selon la revendication 2, **caractérisé en ce que** l'écart moyen entre le segment droit (53) du fil d'émission (5) et l'antenne (2) est égal à un quart de la longueur d'onde du guide d'ondes dans l'antenne (2) à une fréquence à émettre, en particulier à une fréquence centrale d'un spectre de fréquence d'une impulsion d'émission de micro-ondes à émettre ou à une fréquence centrale d'un signal d'émission FMCW à modulation de fréquence linéaire.

4. Agencement selon la revendication 1, **caractérisé en ce que** le fil d'émission (5) est disposé sur une plaquette de circuits imprimés (8) fixée dans l'antenne (2).

5. Agencement selon la revendication 1, **caractérisé en ce qu'**un élément de compensation (9), en particulier un cône métallique ou un anneau métallique, est disposé sur le fil d'émission (5).

6. Agencement selon la revendication 1, **caractérisé en ce qu'**un insert diélectrique, en particulier en polytétrafluoréthylène, qui remplit l'espace intérieur de l'antenne dans l'entourage du fil d'émission (5), est disposé dans l'antenne (2).

7. Agencement selon la revendication 1, **caractérisé en ce que** l'antenne (2) présente un premier dispositif de fixation, en particulier une bride ou un filetage extérieur (22), au moyen duquel il peut être fixé en un lieu, en particulier sur un réservoir ou un récipient.

8. Utilisation d'un agencement selon l'une des revendications 1 à 7 dans un appareil de mesure de niveau.
